# EUROPÄISCHE PATENTSCHRIFT

(11) **EP 2 388 171 B1**
(45) Veröffentlichungstag und Bekanntmachung des Hinweises auf die Patenterteilung: **04.03.2015**
(21) Anmeldenummer: 11160769.3
(22) Anmeldetag: 01.04.2011
(51) Int. Cl.: B60W 30/12, B62D 15/02

(54) **Spurhalteassistenzsystem zur Querführungsunterstützung an einem nicht spurgebundenen Kraftfahrzeug**
Assistance system for keeping in lane for transverse guidance support in a motor vehicle that is not on rails
Système d'assistance au maintien de la trajectoire destiné au soutien du guidage transversal sur un véhicule automobile non lié à la voie de circulation

(30) Priorität: 21.05.2010 DE 102010029222
(43) Veröffentlichungstag der Anmeldung: 23.11.2011
(73) Patentinhaber: Bayerische Motoren Werke Aktiengesellschaft, 80809 München (DE)
(72) Erfinder: Dr.Schaller, Thomas, 84405 Dorfen (DE); Dr.Spannheimer, Helmut, 85630 Neukeferloh (DE)

(56) Entgegenhaltungen:
- EP-A2- 1 588 922
- DE-A1- 19 841 709
- DE-A1-102006 013 045
- DE-A1-102007 050 189
- DE-T2- 60 308 075

## Beschreibung

Die Erfindung betrifft ein Spurhalteassistenzsystem zur Querführungsunterstützung an einem nicht spurgebundenen Kraftfahrzeug, nach dem Oberbegriff des Anspruchs 1. Zum Stand der Technik wird neben der DE 603 08 075 T2 insbesondere auf die DE 10 2007 050 189 A1 verwiesen, aus der ein solches Fahrerassistenzsystem bekannt ist.

Es wird angestrebt, das Führen eines nicht spurgebundenen Kraftfahrzeugs für den Fahrer dieses Fahrzeugs einfacher zu gestalten und auf diese Weise nicht nur das Führen des Fahrzeugs komfortabler zu gestalten, sondern auch die Sicherheit im Straßenverkehr zu erhöhen. In Entwicklung und teilweise bereits in Serie befinden sich daher Spurhalteassistenzsysteme nach dem Oberbegriff des Anspruchs 1, die mittels einer Kamera die vor dem Fahrzeug liegende Fahrspur insbesondere anhand der auf die Fahrbahn aufgezeichneten Spur-Leitlinien zu erfassen in der Lage sind. Das Spurhalteassistenzsystem kann nun ausgelegt sein, das Fahrzeug in dieser erkannten Fahrspur - vorzugsweise unter Einhaltung eines geringen Sicherheitsabstandes zu den Spur-Leitlinien - zu halten, d.h. dann, wenn das Fahrzeug aufgrund einer Unachtsamkeit des Fahrers diese Fahrspur zu verlassen droht, ein derartiges sog. Rückführmoment in das Lenksystem des Fahrzeugs einzuleiten, dass das Fahrzeug in die Fahrspur zurück geführt wird. Die Einleitung des genannten Rückführmoments erfolgt dabei üblicherweise durch geeignete Ansteuerung eines im Lenksystem vorgesehenen Servo-Motors, der auch ein Unterstützungsmoment bereit stellt, welches den Fahrer beim Aufbringen eines von ihm gewünschten Lenkmoments unterstützt. Selbstverständlich darf dabei ein vom Spurhalteassistenzsystem erzeugtes Rückführmoment betragsmäßig nicht so groß sein, dass das Fahrzeug gegen den Willen des Fahrers in der Fahrspur gehalten wird; vielmehr muss es dem Fahrer stets möglich sein, sich über das Spurhalteassistenzsystem hinwegzusetzen und selbst die Fortbewegungsrichtung des Fahrzeugs zu bestimmen. Hierfür legt der Fahrer ein entsprechend großes sog. Handmoment an das Lenkrad des Lenksystems an, wodurch eine sog. Spezifikationsgrenze des Spurhalteassistenzsystems überschritten wird, was zu dessen Deaktivierung führt. Das Spurhalteassistenzsystem kann also nur Rückführmomente bis zu einem gewissen, relativ geringen Betrag in das Lenksystem einleiten. Neben dieser Betragsbegrenzung gibt es weitere sinnvolle sog. Spezifikationsgrenzen eines Spurhalteassistenzsystems, die beispielsweise durch die Fahrgeschwindigkeit des Fahrzeugs gebildet sein können. Beispielsweise kann aus Sicherheitsgründen festgelegt sein, dass das Spurhalteassistenzsystem nur bei Fahrgeschwindigkeiten kleiner als 40 km/h aktiv ist, d.h. insbesondere im Kolonnenverkehr sowie im sog. Stop-and-Go-Betrieb, wo ein Spurhalteassistenzsystem dem Fahrer eine große Erleichterung bringen kann.

Es hat sich jedoch gezeigt, dass mit einem soweit erläuterten Spurhalteassistenzsystem in Abhängigkeit davon, wie groß der genannte Sicherheitsabstand zu den Rändern der Fahrspur, d.h. beispielsweise zu den auf der Fahrbahn aufgezeichneten Spur-Leitlinien, gewählt wird, entweder im Falle eines geringen Sicherheitsabstandes keine nennenswerte Steigerung des Komforts erzielt werden kann, oder im Falle eines sehr großen Sicherheitsabstandes der Fahrer zwar ein komfortables Fahrverhalten erfährt, dabei jedoch zu stark aus seiner weiterhin beizubehaltenden Verantwortung genommen wird, was gemeinhin als "Out-of-the-Loop-Problematik" bezeichnet wird. Wird nämlich der genannte Sicherheitsabstand zu den Rändern relativ groß gewählt, so kann sich der Fahrer praktisch ohne eigene Beteiligung alleine vom Spurhalteassistenzsystem komfortabel chauffieren lassen, da dieses ohne für den Fahrer spürbare störende Lenkeingriffe das Fahrzeug exakt innerhalb der engen Grenzen, die durch einen relativ großen Sicherheitsabstand zu den Rändern der Fahrspur gebildet sind, hält. Eine solche letztgenannte Systemauslegung ist jedoch unerwünscht, da der Fahrer hierdurch dazu verleitet wird, seine Verantwortung für das Führen des Kraftfahrzeugs vollständig an das Spurhalteassistenzsystem abzugeben und sich quasi vollständig aus dem "Loop", d.h. dem "Regelkreis" der Fahrzeug-Führung herauszunehmen.

Wird hingegen der besagte Sicherheitsabstand gering gewählt, so muss der Fahrer entweder kontinuierlich selbst das Fahrzeug hoch konzentriert innerhalb der Fahrspur halten oder es wird, falls er dies nicht tut, das Fahrzeug quasi in Schlangenlinien vom Spurhalteassistenzsystem durch die Fahrspur geführt, indem immer wieder der Rand bzw. eine den Sicherheitsabstand berücksichtigende Grenze der Fahrspur erreicht wird, von dem das Spurhalteassistenzsystem das Fahrzeug immer wieder in Richtung Fahrspur-Mitte wegführt.

In der eingangs genannten DE 603 08 075 T2 ist vorgeschlagen, zumindest zwei sog. Zielhilfslenkkräfte vorzusehen, zwischen denen bei einem Wechsel von automatischem Lenken durch das Assistenzsystem und dem Lenken durch den Fahrer kontinuierlich gewechselt wird, um beim Fahrer kein unangenehmes Lenk-Gefühl aufkommen zu lassen. In der weiterhin genannten DE 10 2007 050 189 A1 ist ebenfalls bereits ein unterschiedliches, und zwar vorrangig von der Position des Fahrzeugs relativ zur Sollspurlinie und/oder von der Fahrgeschwindigkeit des Fahrzeugs abhängiges Unterstützungsbedürfnis des Fahrers berücksichtigt, so dass also dann, wenn das Fahrzeug weiter von der Sollspurlinie entfernt ist, vom System ein betragsmäßig größeres Rückführmoment bereit gestellt wird als wenn sich das Fahrzeug nahe der Sollspurlinie befindet. Damit kann sich jedoch wieder der am Ende des vorhergehenden Absatzes erläuterte Zustand einstellen, nämlich dass sich das Fahrzeug quasi in Schlangenlinien entlang der Fahrspur bewegt.

Aufgabe der vorliegenden Erfindung ist es daher, ein Spurhalteassistenzsystem aufzuzeigen, welches dem Fahrer einerseits einen guten Komfort bietet, d.h. tatsächlich eine für ihn kontinuierlich spürbare Assistenz darstellt, und andererseits den Fahrer nicht dazu veranlasst, sich praktisch vollständig "aus dem Loop zu nehmen, d.h. völlig untätig zu werden, denn derzeitig sind Spurhalteassistenzsysteme noch nicht in der Lage, auf sämtliche Unwägbarkeiten, die als Randbedingungen auftreten können, mit absoluter Sicherheit richtig zu reagieren, weshalb ein solches passives Verhalten des Fahrers unbedingt vermieden werden sollte.

Zur Lösung dieser Aufgabe sind für ein Spurhaltesystem nach dem Oberbegriff des Anspruchs 1 die im kennzeichnenden Teil des Anspruchs 1 angegeben Merkmale vorgeschlagen.

Ein erfindungsgemäßes Spurhalteassistenzsystem kann zunächst in zwei verschiedenen Ausprägungen, deren Unterschied für den aufmerksamen Fahrer spürbar ist, aktiv sein, nämlich erstens im Sinne einer sog. Komfortfunktion beim Bestreben des Fahrers, das Fahrzeug ziemlich genau in der gewünschten Fahrspur zu halten. Hierbei leitet das Spurhalteassistenzsystem betragsmäßig nur äußerst geringe Rückführmomente in das Lenksystem ein, die alleine nicht ausreichen, um das Fahrzeug in einer gewünschten Spur oder entlang einer sog. Trajektorie, die das Spurhalteassistenzsystem aufgrund der von ihm erkannten Fahrspur bildet, zu führen. Vielmehr ist stets eine geringfügiges Handmoment des Fahrers erforderlich, wenn das Fahrzeug in dieser Spur oder entlang dieser Trajektorie geführt werden soll, wobei der Fahrer aufgrund des vom Spurhalteassistenzsystem bereit gestellten geringen Rückführmomentes jedoch an seinem Lenkrad spürt, mit welcher Orientierung und in welchem Umfang der Fahrer mit seinem Lenkrad lenken sollte, d.h. welches Handmoment er in das Lenksystem einleiten sollte, damit sich das Fahrzeug in der gewünschten Spur oder entlang der gewünschten Trajektorie bewegt. Diese soweit beschriebene Ausprägung wird als unterstützende Betriebsart bezeichnet und steigert aufgrund der beschriebenen Unterstützung zwar den Komfort, ohne jedoch dabei eine derart intensive Unterstützung bereit zu stellen, dass der sich der Fahrer vollständig "aus dem Loop nehmen" kann, d.h. ohne dass der Fahrer zur vollständigen Untätigkeit verleitet wird.

Neben dieser vorliegend sog. unterstützenden Betriebsart gibt es erfindungsgemäß noch eine sog. führende Betriebsart, in der das Spurhalteassistenzsystem betragsmäßig größere Rückführmomente bereit zu stellen in der Lage ist bzw. tatsächlich größere Rückführmomente bereit stellt, die - weiterhin jedoch nur innerhalb der bereits genannten Spezifikationsgrenzen des Spurhalteassistenzsystems - das Fahrzeug in die gewünschte Spur bzw. auf die gewünschte genannte Trajektorie führen. Um jedoch - wie bereits erwähnt wurde - de Fahrer bei aktivem Spurhalteassistenzsystem nicht dazu zu verleiten, sich vollständig aus der Verantwortung (und aus dem "Loop") zu nehmen, wird erfindungsgemäß das Spurhalteassistenzsystem vorrangig in der erläuterten sog. unterstützenden Betriebsart (mit dem geringeren, für eine alleinige Spurführung nicht ausreichenden Rückführmoment) betrieben und es wird nur in einem sog. Bedarfsfall selbsttätig auf die führende Betriebsart, in der ein höheres, das Fahrzeug tatsächlich führendes Rückführmoment bereit gestellt wird, übergewechselt. Sobald mit dieser führenden Betriebsart das Fahrzeug die gewünschte Spur bzw. Trajektorie erreicht hat, wechselt das Spurhalteassistenzsystem selbsttätig wieder (zurück) in die bzw. seine unterstützende Betriebsart.

Hinsichtlich des genannten Bedarfsfalls, bei dessen Eintreten das Spurhalteassistenzsystem von der genannten unterstützenden Betriebsart in die führende Betriebsart wechselt, gibt es verschiedene Möglichkeiten bzw. Auslegungsphilosophien für ein erfindungsgemäßen Spurhalteassistenzsystem, welches vorzugsweise überhaupt einmal grundsätzlich vom Fahrer des Fahrzeugs bewusst aktiviert werden muss.

Vorliegend ist erfindungsgemäß ein innovativer und dabei äußerst sinnvoller Bedarfsfall vorgeschlagen, in welchem das Spurhalteassistenzsystem von der zweiten unterstützenden Betriebsart selbsttätig in die erste führende Betriebsart wechselt. Abweichend vom (üblichen) Stand der Technik, nach welchem ein größeres Unterstützungsmoment dann vom Assistenzsystem bereit gestellt wird, wenn sich das Fahrzeug weiter von der Sollspurlinie bzw. Fahrspur-Trajektorie entfernt befindet, und ein geringeres Unterstützungsmoment dann bereit gestellt wird, wenn sich das Fahrzeug relativ nahe bei der Sollspurlinie/ Fahrspur-Trajektorie befindet, wird vorliegend ein größeres Unterstützungsmoment dann bereit gestellt, wenn das Assistenzsystem erkennt, dass der Fahrer zurück in die Fahrspur-Trajektorie bzw. exakt auf die Sollspurlinie finden möchte. Es wird somit ein sog. Bedarfsfall aufgrund der Tatsache festgestellt, dass sich das abseits der Trajektorie befindende Fahrzeug in Richtung dieser Trajektorie bewegt. (Es wird hier und im weiteren teilweise anstelle des Begriffs "Fahrspur-Trajektorie" nur das Wort "Trajektorie" verwendet). Der genannte Bedarfsfall wird also im Unterschied zum bekannten Stand der Technik nicht anhand der Tatsache festgestellt, dass das Fahrzeug die Fahrspur-Trajektorie verlässt, sondern daran, dass sich das Fahrzeug, nachdem dieses die genannte Fahrspur-Trajektorie (bereits) verlassen hat, wieder auf die Trajektorie zu bewegt. Letzteres kann verschiedene Ursachen haben. So kann der Fahrer für das Spurhalteassistenzsystem erkennbar versuchen, diese Trajektorie wieder zu finden, indem er mittels seines Handmoments das sich abseits der Fahrspur-Trajektorie befindende Fahrzeug in Richtung dieser Fahrspur-Trajektorie steuert. Beispielsweise beim Befahren einer Kurve kann sich das Fahrzeug jedoch auch ohne einen entsprechenden Lenkeingriff des Fahrers auf die Fahrspur-Trajektorie zu bewegen. Das Spurhalteassistenzsystem wird also nicht bereits dann aktiv, wenn das Fahrzeug von der genannten Trajektorie abweicht, sondern erst dann, wenn sich das Fahrzeug - aus welchen anderen Gründen auch immer - in Richtung dieser Trajektorie bewegt. Erkennbar ist dies für das Spurhalteassistenzsystem erst dann, wenn das Fahrzeug diese Fahrspur-Trajektorie bereits verlassen hat, wobei diese letztgenannte Tatsache ausdrücklich nicht den sog. Bedarfsfall darstellt, aufgrund dessen von der unterstützenden Betriebsart in die führende Betriebsart umgeschaltet wird. Vielmehr erfolgt diese Umschaltung erst dann bzw. es wird erst dann der sog. Bedarfsfall erkannt, wenn der Fahrer mittels seines Handmoments das sich abseits der Fahrspur-Trajektorie befindende Fahrzeug in Richtung dieser Fahrspur-Trajektorie steuert oder wenn das sich abseits der Trajektorie bewegende Fahrzeug in Richtung dieser Trajektorie fährt. Ist diese Trajektorie dann mit der führenden Betriebsart des Spurhalteassistenzsystems erreicht, so wechselt dieses wieder selbsttätig in die zweite unterstützende Betriebsart, um zu verhindern, dass der Fahrer in Untätigkeit verharrt.

Zurückkommend auf die grundsätzliche Aktivierung des Spurhalteassistenzsystems durch den Fahrer kann mit einer solchen bewussten Aktivierung vorzugsweise die erste führende Betriebsart des Spurhalteassistenzsystems im Sinne einer KomfortFunktion aktiv sein und dementsprechend das Spurhalteassistenzsystem ein derartiges Rückführmoment bereitstellen, dass das Fahrzeug erst einmal auf eine der vom Fahrer gewünschten Fahrspur entsprechende und vom Spurhalteassistenzsystem ermittelte Fahrspur-Trajektorie geleitet wird. Im Rahmen einer Initialisierung wird also das Fahrzeug erstmalig auf die sog. Fahrspur-Trajektorie geführt. Ist diese dann erstmalig erreicht, so wechselt das Spurhalteassistenzsystem selbsttätig in die zweite unterstützende Betriebsart.

Es sei nochmals ausdrücklich darauf hingewiesen, dass ein geschildertes Verhalten des Spurhalteassistenzsystems sowie ein Bereitstellen eines jeweiligen Rückführmomentes durch das Spurhalteassistenzsystem stets nur innerhalb von dessen Spezifikationsgrenzen erfolgt. Hingegen stellt das Spurhalteassistenzsystem in einer dessen Spezifikationsgrenzen überschreitenden Fahrsituation kein Rückführmoment bereit und weist den Fahrer hierauf geeignet hin, so dass er weiß, dass er im weiteren alleine das für das Führen des Fahrzeugs erforderliche Lenkmoment (mit Ausnahme des üblichen Servo-Moments) in das Lenksystem des Fahrzeugs einleiten muss.

Im Sinne einer vorteilhaften Weiterbildung kann ein erfindungsgemäßes Spurhalteassistenzsystem in einem Fall des Überschreitens von dessen Spezifikationsgrenzen jedoch weiterhin registrieren, ob das Fahrzeug in der zuvor erkannten Fahrspur verbleibt, und es kann mit einem Wiedereintritt in eine innerhalb der Spezifikationsgrenzen des Spurhalteassistenzsystems liegenden Fahrsituation das Spurhalteassistenzsystem selbsttätig mit seiner ersten führenden Betriebsart aktiviert werden, die daraufhin das Fahrzeug auf die der registrierten Fahrspur entsprechenden Fahrspur-Trajektorie leitet. Mit Erreichen dieser Fahrspur-Trajektorie wechselt das Spurhalteassistenzsystem dann selbsttätig in die zweite unterstützende Betriebsart. Diese soeben erläutere vorteilhafte Weiterbildung kann vorzugsweise im Kolonnenverkehr realisiert sein, wenn die Fahrgeschwindigkeit um die sog. Geschwindigkeits-Ausschalteschwelle des Spurhalteassistenzsystems pendelt. Wie weiter oben bereits erläutert wurde, kann ein Spurhalteassistenzsystem ausgelegt sein, nur bis zu einer Fahrgeschwindigkeit von beispielsweise 40 km/h aktiv zu sein, während bei höheren Fahrgeschwindigkeiten eine Spurhalte-Unterstützung ausgeschlossen ist. Beispielsweise bewege sich für einen solchen Fall das Fahrzeug zunächst mit 30 km/h und es sei das Spurhalteassistenzsystem wie erläutert aktiv, d.h. vorrangig in der unterstützenden Betriebsart und im Bedarfsfall in der führenden Betriebsart. Beschleunigt dann das Fahrzeug auf eine Geschwindigkeit über 40 km/h, so wird das Spurhalteassistenzsystem wegen Überschreiten einer Spezifikationsgrenze zwar deaktiviert, bleibt jedoch weiterhin in einem sog. Überwachungsmodus hinsichtlich des Beibehaltens der zuvor befahrenen Fahrspur und wird in der geschilderten Weise dann wieder selbsttätig aktiv, wenn die Fahrgeschwindigkeit auf einen Wert unter 40 km/h (und somit innerhalb der Spezifikationsgrenzen) gefallen ist. Dann führt das Spurhalteassistenzsystem das Fahrzeug zunächst in der führenden Betriebsart auf die genannte Trajektorie und schaltet danach in die unterstützende Betriebsart um.

Indem mit Erreichen der Fahrspur-Trajektorie das Spurhalteassistenzsystem in die zweite unterstützende Betriebsart wechselt, die im Sinne der vorliegenden Erfindung ein geringes Handeln des Fahrers erfordert, wobei ihm durch diese unterstützende Betriebsart bzw. durch das in dieser Betriebsart betragsmäßig sehr geringe bereit gestellte Rückführmoment sensitiv angezeigt wird, wie er das Lenkrad betätigen bzw. welches Handmoment er in das Lenksystem des Fahrzeugs einleiten sollte, wenn er das Fahrzeug in der vom Spurhalteassistenzsystem erkannten Fahrspur halten möchte, ergibt sich für den Fahrer ein spürbarer Komfortgewinn, der jedoch im Sinne der vorliegenden Erfindung aufgrund des betragsmäßig auf einen sehr niedrigen Wert begrenzten Rückführmomentes den Fahrer nicht zu völligen Untätigkeit verleitet, so dass der Fahrer quasi gezwungen sich, sich "im Loop zu halten".

## Patentansprüche

1. Spurhalteassistenzsystem zur Querführungsunterstützung an einem nicht spurgebundenen Kraftfahrzeug, das eine vor dem Fahrzeug liegende Fahrspur erfasst und im Bedarfsfall im Lenksystem des Fahrzeugs ein derartiges Rückführmoment erzeugt, dass im Zusammenwirken mit einem vom Fahrer des Fahrzeugs gegebenenfalls an das Lenksystem angelegten Handmoment das Fahrzeug in die Fahrspur zurückgeführt wird, wobei das Spurhalteassistenzsystem ausgelegt ist, innerhalb seiner Spezifikationsgrenzen Rückführmomente in zwei grundsätzlich unterschiedlichen Ausprägungen zu erzeugen, nämlich indem in einer ersten sog. führenden Betriebsart des Spurhalteassistenzsystems alle Fahrsituationen ohne einen Eingriff des Fahrers vom Spurhalteassistenzsystem alleine durch Bereitstellung eines betragsmäßig ausreichend großen Rückführmomentes dargestellt werden können, während in einer zweiten sog. unterstützenden Betriebsart ein betragsmäßig geringeres Rückführmoment bereitgestellt wird, so dass zusätzlich ein geringes Handmoment des Fahrers benötigt wird, um das Fahrzeug in der Fahrspur zu halten, und wobei das genannte geringe, dabei vom Fahrer aufzubringende Handmoment betragsmäßig kleiner ist, als wenn bei gleicher Fahrsituation das Spurhalteassistenz-System kein Rückführmoment bereit stellen würde, **dadurch gekennzeichnet, dass** ein Bedarfsfall, in dem das Spurhalteassistenzsystem von der zweiten unterstützenden Betriebsart selbsttätig in die erste führende Betriebsart wechselt, nicht aufgrund der Tatsache festgestellt wird, dass das Fahrzeug die Fahrspur-Trajektorie verlässt, sondern anhand der Tatsache, dass sich das abseits der Trajektorie befindende Fahrzeug in Richtung dieser Trajektorie bewegt, und dass mit Erreichen dieser Fahrspur-Trajektorie das Spurhalteassistenzsystem in die zweite unterstützende Betriebsart wechselt.

2. Spurhalteassistenzsystem nach Anspruch 1,
**dadurch gekennzeichnet, dass** nach Aktivierung des Spurhalteassistenzsystems durch den Fahrer die erste führende Betriebsart des Spurhalteassistenzsystems aktiv ist und ein derartiges Rückführmoment bereitstellt, dass das Fahrzeug auf eine der vom Fahrer gewünschten Fahrspur entsprechenden und vom Spurhalteassistenzsystem ermittelten Fahrspur-Trajektorie geleitet wird, und dass mit Erreichen dieser Fahrspur-Trajektorie das Spurhalteassistenzsystem in die zweite unterstützende Betriebsart wechselt.

3. Spurhalteassistenzsystem nach Anspruch 1 oder 2,
**dadurch gekennzeichnet, dass** das Spurhalteassistenzsystem in einer dessen Spezifikationsgrenzen überschreitenden Fahrsituation kein Rückführmoment bereitstellt und den Fahrer hierauf hinweist, jedoch weiterhin registriert, ob das Fahrzeug in der zunächst erkannten Fahrspur verbleibt, und dass mit Wiedereintritt einer innerhalb der Spezifikationsgrenzen des Spurhalteassistenzsystems liegenden Fahrsituation selbsttätig die erste führende Betriebsart aktiviert wird, die das Fahrzeug auf die der registrierten Fahrspur entsprechenden Fahrspur-Trajektorie leitet, und dass mit Erreichen dieser Fahrspur-Trajektorie das Spurhalteassistenzsystem in die zweite unterstützende Betriebsart wechselt.

## Claims

1. An assistance system for keeping in lane for transverse guidance support on a motor vehicle that is not on rails, which detects a lane located in front of the vehicle and; if necessary, produces a return torque in the steering system of the vehicle such that in cooperation with a manual torque applied to the steering system when appropriate by the driver of the vehicle, the vehicle is returned to the lane, wherein the assistance system for keeping in lane is configured, within its specification limits, to produce return torques in two basically different forms, namely in that, in a first so-called guiding operating mode of the assistance system for keeping in lane, all the driving situations can be represented by the assistance system for keeping in lane merely by providing an adequately large return torque in terms of amount without an intervention by the driver, while in a second so-called assisting operating mode, a smaller return torque in terms of amount is provided so that a small manual torque by the driver is additionally required in order to keep the vehicle in the lane, and wherein the said small manual torque to be provided here by the driver is smaller in terms of amount than if the assistance system for keeping in lane did not provide a return torque in the same driving situation, **characterised in that** a case of necessity, in which the assistance system for keeping in lane automatically changes from the second assisting operating mode into the first guiding operating mode, is not established on the basis of the fact that the vehicle leaves the lane trajectory, but with the aid of the fact that the vehicle located away from the trajectory moves in the direction of this trajectory, and **in that** on reaching this lane trajectory, the assistance system for keeping in lane changes into the second assisting operating mode.

2. An assistance system for keeping in lane according to claim 1, **characterised in that** once the driver has activated the assistance system for keeping in lane, the first guiding operating mode of the assistance system for keeping in lane is active and provides a return torque such that the vehicle is guided to a lane trajectory corresponding to the lane desired by the driver and determined by the assistance system for keeping in lane, and **in that** on reaching this lane trajectory, the assistance system for keeping in lane changes to the second assisting operating mode.

3. An assistance system for keeping in lane according to claim 1 or 2, **characterised in that** the assistance system for keeping in lane does not provide a return torque in a driving situation exceeding its specification limits and indicates this to the driver, but continues to record whether the vehicle remains in the firstly recognised lane, and **in that** upon return to a driving situation located within the specification limits of the assistance system for keeping in lane, the first guiding operating mode is automatically activated, said operating mode guiding the vehicle to the lane trajectory corresponding to the recorded lane, and **in that** on reaching this lane trajectory, the assistance system for keeping in lane changes to the second assisting operating mode.

## Revendications

1. Système d'assistance au maintien d'une trajectoire pour permettre d'aider le guidage transversal d'un véhicule non lié à la voie de circulation qui détecte une trajectoire de circulation située devant le véhicule et produit en cas de besoin, dans le système de direction du véhicule un couple redresseur tel que, en coopération avec un couple manuel appliqué le cas échéant sur le système de direction par le conducteur du véhicule, ce véhicule revienne dans la trajectoire de circulation, le système d'assistance au maintien de la trajectoire étant conçu pour permettre de produire dans ses limites de spécification des couples redresseurs selon deux modes de fonctionnement s'expriment de manière fondamentalement différences, à savoir, dans un premier mode de fonctionnement du système d'assistance au maintien de la trajectoire dit mode de fonctionnement « directeur » toutes les situation de conduite peuvent être obtenues sans action du conducteur par le seul système d'assistance au maintien de la trajectoire en préparant un couple redresseur d'un niveau suffisamment important tandis que, dans un second mode de fonctionnement dit mode de fonctionnement « assisté » un couple redresseur d'un plus faible niveau est fourni, de sorte qu'un faible couple manuel appliqué par le conducteur soit en outre nécessaire pour maintenir le véhicule dans la trajectoire de déplacement, et, ce faible couple manuel devant être appliqué par le conducteur étant d'un niveau inférieur à celui qui devrait être appliqué, si dans la même situation de conduite le système d'assistance au maintien de la trajectoire ne fournissait aucun couple redresseur,
**caractérisé en ce qu'**
un besoin, dans lequel le système d'assistance au maintien de la trajectoire passe automatiquement du second mode de fonctionnement assisté dans le premier mode de fonctionnement directeur n'est pas déterminé à partir du fait que le véhicule sort de la trajectoire de déplacement mais sur le fondement du fait que, le véhicule se trouvant en dehors de la trajectoire se déplace en direction de cette trajectoire et lorsque cette trajectoire de déplacement a été atteinte, le système d'assistance au maintien de la trajectoire passe dans le second mode de fonctionnement assisté.

2. Système d'assistance au maintien d'une trajectoire conforme à la revendication 1,
**caractérisé en ce qu'**
après l'activation du système d'assistance au maintien de la trajectoire par le conducteur, le premier mode de fonctionnement directeur du système d'assistance au maintien de la trajectoire est actif et fournit un couple redresseur tel que le véhicule soit guidé sur une trajectoire de déplacement correspondant à la trajectoire de déplacement souhaitée par le conducteur et déterminée par le système d'assistance au maintien de la trajectoire, et, lorsque cette trajectoire de déplacement a été atteinte le système d'assistance au maintien de la trajectoire passe dans le second mode de fonctionnement assisté.

3. Système d'assistance au maintien d'une trajectoire conforme à la revendication 1 ou 2,
**caractérisé en ce que**
dans une situation de conduite dépassant ses limites de spécification, le système d'assistance au maintien de la trajectoire ne fournit pas de couple redresseur et en avertit le conducteur, mais, enregistre encore si le véhicule reste dans la trajectoire de déplacement préalablement détectée, et lors d'un retour dans une situation de conduite située à l'intérieur des limites de spécification du système d'assistance au maintien de la trajectoire, est automatiquement activé le premier mode de fonctionnement directeur qui guide le véhicule sur la trajectoire de déplacement correspondant à la trajectoire enregistrée, et, lorsque cette trajectoire de déplacement a été atteinte le système d'assistance au maintien de la trajectoire passe dans le second mode de fonctionnement assisté.
